# EUROPÄISCHE PATENTSCHRIFT

(11) **EP 4 464 806 B1**
(45) Veröffentlichungstag und Bekanntmachung des Hinweises auf die Patenterteilung: **29.10.2025**
(21) Anmeldenummer: 23173883.2
(22) Anmeldetag: 17.05.2023
(51) Int. Cl.: C22C 1/02, C22C 9/04, C22F 1/08, F16C 33/12

(54) **BLEIFREIE CU-ZN-LEGIERUNG, DARAUS HERGESTELLTES LEGIERUNGSPRODUKT SOWIE VERFAHREN ZUM HERSTELLEN EINES LEGIERUNGSPRODUKTES AUS DIESER LEGIERUNG**
LEAD-FREE CU-ZN ALLOY, ALLOY PRODUCT MADE THEREFROM AND METHOD FOR PRODUCING ALLOY PRODUCT MADE FROM THIS ALLOY
ALLIAGE CU-ZN SANS PLOMB, PRODUIT D'ALLIAGE FABRIQUÉ À PARTIR DE CELUI-CI ET PROCÉDÉ DE FABRICATION D'UN PRODUIT D'ALLIAGE À PARTIR DE CET ALLIAGE

(43) Veröffentlichungstag der Anmeldung: 20.11.2024
(73) Patentinhaber: Otto Fuchs - Kommanditgesellschaft -, 58540 Meinerzhagen (DE)
(72) Erfinder: REETZ, Björn, 47800 Krefeld (DE); MÜNCH, Tileman, 41751 Viersen (DE); PLETT, Thomas, 57392 Schmallenberg (DE)
(74) Vertreter: Haverkamp Patentanwälte PartG mbB

(56) Entgegenhaltungen:
- EP-A1- 3 272 888
- EP-A1- 3 992 319
- EP-A1- 4 123 042
- DE-B4- 102007 029 991

## Beschreibung

Die Erfindung betrifft eine bleifreie Cu-Zn-Legierung sowie ferner ein aus dieser Legierung hergestelltes Legierungsprodukt. Gegenstand der Erfindung ist zudem ein Verfahren zum Herstellen des Legierungsproduktes.

Sondermessinglegierungen sind aus dem Stand der Technik mit einer Vielzahl unterschiedlicher Legierungszusammensetzungen bekannt. Eingesetzt werden diese für unterschiedliche Zwecke. Sondermessinglegierungen umfassen neben den Hauptelementen Cu und Zn weitere Elemente, durch die die gewünschten Legierungseigenschaften eingestellt werden können. Hierzu gehört auch das damit erzielbare Gefüge. Das Gefüge des Legierungsproduktes ist maßgeblich für bestimmte Eigenschaften des Legierungsproduktes, beispielsweise seine Verarbeitbarkeit, wie etwa ein Warmumformen, verantwortlich. Für das Warmumformen wird bevorzugt, dass die Messinglegierung eine dominierende β-Phase aufweist. Wesentliche Ursache für die gute Warmumformbarkeit der β-Phase bei höheren Temperaturen sind eine leichtere Aktivierung der Gleitsysteme innerhalb der Mikrostruktur der Legierung als Träger der plastischen Verformung und eine geringe Warmverfestigung. Dies resultiert vereinfacht in einer höheren Duktilität sowie eine geringere Härte der β-Phase während des Warmumformens. Ein gewisser Anteil an α-Phase ist tolerabel. Allerdings ist man bestrebt, bei warmumformbaren Sondermessinglegierungen die Ausbildung einer γ-Phase zu vermeiden, da diese spröde ist und somit die gewünschten Warmumformeigenschaften nachteilig beeinflusst.

Problematisch bei Mehrstofflegierungen, vor allem solchen, die mehrere Legierungselemente neben Cu und Zn enthalten, ist, dass aufgrund der komplexen Wirkung zwischen den einzelnen Legierungskomponenten eine Änderung einer einzelnen Komponente zu nicht vorhersehbaren Änderungen an dem Legierungsprodukt führen kann. Eine Änderung mehrerer Legierungskomponenten in einer Legierung führt daher erst recht zu nicht vorhersehbaren Ergebnissen.

Für gleitbeanspruchte Bauteile wurden bleireduzierte bzw. bleifreie Cu-Zn-Legierungen vorgeschlagen, die Phasenausscheidungen in der Form von Mangansiliziden aufweisen. Diese verleihen dem Legierungsprodukt eine hohe Beständigkeit gegen abrasiven Verschleiß und verringern die Neigung zur lokalen Adhäsion an den Gleitflächen. Derartige Legierungen weisen vielfach ein Gefüge mit überwiegend β-Phase oder eine heterogene Matrix mit α- und β-Phasen auf.

Ein hoher β-Phasenanteil wirkt sich jedoch bei einer Cu-Zn-Legierung nachteilig auf die Kaltumformbarkeit aus. Um dem entgegenzuwirken, wird in DE 10 2007 029 991 B4 vorgeschlagen, das Legierungsprodukt mit einem Gefüge auszubilden, in dem Eisen und Nickel enthaltende Mangansilizide vorliegen und das eine α-Matrix aufweist, in die 5 Vol.-% bis 50 Vol.-% β-Phase eingelagert ist. Die Legierungszusammensetzung besteht aus 28 bis 36 Gew.-% Zink, 0,5 -1,5 Gew.-% Silizium, 1,5 - 2,5 Gew.-% Mangan, 0,2 - 1,0 Gew.-% Nickel, 0,5 - 1,5 Gew.-% Aluminium, 0,1 - 1,0 Eisen und Rest Kupfer.

Des Weiteren wird durch EP 3 272 888 A1 ein Messing-Legierungsprodukt offenbart, das hohe Kaltumformgrade ohne Zwischenglühen ermöglicht. Mit einer Legierungszusammensetzung von 21 - 27 Gew.-% Zink, 0,2 - 0,8 Gew.-% Silizium, 1,1 - 1,9 Gew.-% Mangan und 0,005 - 0,2 Gew.-% Phosphor resultiert eine α-Matrix, in der manganhaltigen Phosphide mit einer perlenschnurartigen Anordnung vorliegen.

DE 36 26 435 A1 offenbart eine Cu-Zn-Legierung mit 66 bis 90 Gew.-% Kupfer, 1,5 - 8,0 Gew.-% Mangan, 0,3 - 7,0 Gew.-% Aluminium, 0,3 - 2,0 Gew.-% Phosphor, Rest Zink. Bei einem hinreichend hohen Aluminiumanteil liegen innerhalb einer α-Matrix als Verschleißminderer wirkende Manganphosphide im Wesentlichen in eutektischer Verteilung vor, die kleiner als primär ausgeschiedene Phosphide sind und aufgrund dessen die Kaltumformbarkeit nicht negativ beeinflussen.

WO 2015/046421 A1 offenbart eine verfärbungsunempfindliche Kupferlegierung mit 17 - 34 Gew.-% Zn, 0,005 - 1,8 Gew.-% Al, 0,01 - 1,5 Gew.-% Mn, 0,01 - 5 Gew.-% Ni, 0,01 - 1,0 Gew.-% Si, 0,005 - 0,9 Gew.-% P, 0,01 - 2,5 Gew.-% Zink, 0,0005 - 0,0030 Gew.-% Pb, Rest Kupfer. Das Gefüge dieser Legierung ist α-phasendominant und enthält geringe Anteile an β-Phase und γ-Phase. Das Anwendungsgebiet dieser Legierung ist auf eine Farbbeständigkeit gerichtet.

Eine weitere vorbekannte Cu-Zn-Legierung mit hoher Verschleiß- und Korrosionsbeständigkeit ist aus JP S 62274036 A bekannt. Diese Legierung weist folgende Zusammensetzung auf (Angaben in Gew.-%): Cu 37,7 - 89,7%, Si 0,05 - 3,0%, Mn 0,1 - 6,0%, P 0,005 - 0,10 %, Al 0,05 - 1,0% und Sn: 0,05 - 1,0%, Rest Zn. Als obligatorische Legierungsbestandteile können der Legierung Ni, Fe, Cr und/oder Pb jeweils mit Anteilen von 0,005 - 2,0 Gew.-% beigefügt sein.

Ferner ist aus EP 3 992 319 A1 ein Legierungsprodukt, hergestellt aus einer bleifreien Cu-Zn-Legierung bekannt. Diese vorbekannte Legierung bzw. das daraus hergestellte Legierungsprodukt zeichnet sich durch besondere Phasenausscheidungen für eine breite Prozessbandbreite mit vereinfachter Einstellbarkeit aus. Ferner weist dieses vorbekannte Legierungsprodukt eine gute Korrosionsbeständigkeit und eine gute Spanbarkeit auf.

Die Anforderungen an Cu-Zn-Legierungen bzw. an daraus hergestellte Legierungsprodukte können sehr komplex sein. Ein besonders komplexes Anforderungsprofil an die Cu-Zn-Legierung bzw. das daraus hergestellte Legierungsprodukt ist dann gegeben, wenn dieses in einer Ölumgebung einer Gleitbeanspruchung ausgelegt ist, über die Querkräfte in die Gleitflächen aufgrund dynamischer Belastungen eingeleitet werden. Eine solche Anwendung eines typischerweise als Gleitschuh ausgebildeten Gleitteils liegt beispielsweise dann vor, wenn das Gleitteil Teil einer Gelenkverbindung, etwa einer Kugelgelenkverbindung ist und dasjenige Teil der Gelenkverbindung bildet, welches den Gelenkkopf als Gelenkpartner eines anderen Teils aufnimmt. Die an ein solches Teil gestellten Anforderungen betreffen nicht nur eine besondere Verschleißfestigkeit und eine Schmierstoffverträglichkeit auch bei Einsatz unterschiedlicher Schmierstoffe, insbesondere solcher mit Additiven, sondern zudem eine ausreichende Dauerfestigkeit und eine hinreichende plastische Verformungsreserve zur Vermeidung von Belastungsbrüchen. Ist die Gelenkverbindung, insbesondere wenn als Kugelgelenkverbindung ausgeführt, Teil einer Axialkolbenmaschine, etwa einer Axialkolbenpumpe oder eines Axialkolbenmotors, welche Axialkolbenmaschine typischerweise in der Bauart Schrägscheibe oder Schrägachse ausgelegt ist, bestehen zudem entsprechende Anforderungen an die Sohle des Gleitschuhs, mit der dieser auf einer Schwenkscheibe abgestützt ist und aufgrund der Verstellung der Schwenkscheibe gegenüber dieser bewegt wird. Zudem sind gute Zerspanungs- und Umformbarkeitseigenschaften und eine hinreichend hohe Festigkeit erforderlich. Zudem sollte die Legierung kostengünstig herstellbar sein.

Der Erfindung liegt daher die Aufgabe zu Grunde, eine Cu-Zn-Legierung vorzuschlagen, die sich für die Herstellung derartiger Produkte eignet.

Gelöst wird diese Aufgabe erfindungsgemäß durch eine Cu-Zn-Legierung mit (Angaben in Gew.-%):

| | |
|---|---|
| Cu: | 60,5 - 65,6 % |
| Si: | 1,1 - 1,7 % |
| Mn: | 2,51 - 2,9 % |
| Ni: | 0,15 - 0,55 % |
| Fe: | 0,02 - 0,12 % |
| P: | 0,26 - 0,39 % |
| Cr: | 0,018 - 0,12 % |
| Al: | max. 0,3 % |
| Sn: | max. 0,3 % |
| Pb: | max. 0,1 % |
| Zn: | Rest |

nebst unvermeidbaren Verunreinigungen, die elementbezogen nicht mehr als 0,1 % und in der Summe nicht mehr als 0,3 % betragen.

Diese Legierung vereinbart in sich die komplexen Anforderungen, um daraus ein Legierungsprodukt fertigen zu können, welches vor allem komplexen Anforderungsprofilen genügt, insbesondere auch solchen, die an einen Gleitschuh als Teil einer Gelenkverbindung in einer Ölumgebung genügen.

Dass diese Legierung auch komplexen Anforderungsprofilen genügt, liegt in dem besonderen Zusammenwirken der am Aufbau der Legierung beteiligten Elemente begründet, insbesondere in dem speziellen Mn-, P- und Cr-Gehalten in Kombination mit dem Si-Gehalt und der nur geringen Beteiligung weiterer Elemente am Aufbau der Legierung. Der Fe-Anteil ist bewusst sehr gering gehalten. Der Si-Gehalt ist auf eine enge Spanne begrenzt. Erreicht wird durch die Begrenzung des Fe- und Si-Gehaltes, dass sich Silizide als Hartphasen ausbilden, jedoch nicht in einem zu hohen Maße. Der Fe-Anteil ist auch aus dem Grunde gering gehalten, dass mit Blick auf den P-Gehalt der Legierung sich nicht zu grobe Eisenphosphide ausbilden. Durch den beanspruchten Si-Gehalt bilden sich Silizide als Hartphasen mit einem Anteil von nicht mehr als 3 - 6 Vol.-% aus. Ein höherer Anteil an Siliziden würde zwar die Verschleißbeständigkeit eines beispielsweise als Gleitschuh als Teil einer Gelenkverbindung eingesetzten Legierungsproduktes verbessern, jedoch den Verschleiß an der Oberfläche des damit zusammenwirkenden Gelenkkopfes unter Umständen erhöhen, was wiederum bei einer solchen Anwendung nicht erwünscht ist. Die Silizide liegen typischerweise in zwei Fraktionen vor, und zwar einer gröberen, in Pressrichtung eingeregelten Fraktion mit Korngrößen von 15 - 20 µm. Für die Verschleißbeständigkeit sind vor allem die in relativ hoher Anzahl vorliegenden feinverteilten Silizide als zweite Fraktion verantwortlich. Diese weisen Korngrößen von maximal 1 µm auf und befinden sich in der im Gefüge homogen verteilten β-Phase. Der Anteil der β-Phase liegt bei der erfindungsgemäßen Legierung zwischen 17 und 30 %.

Der Si-Gehalt ist in Bezug auf den Anteil an der Legierung der weiteren Silizid bildenden Elemente dahingehend abgestimmt, dass in der Matrix ein gewisser Anteil an freien Si verbleibt. Dieses wirkt sich günstig auf die Ausbildung einer Passivierungsschicht aus, wenn das Legierungsprodukt in einer Ölumgebung, insbesondere einer solchen mit additiven oder synthetischen Leichtlaufölen eingesetzt ist. Mn ist bei dieser Sondermessinglegierung neben Cu und Zn das hinsichtlich seines Anteils wesentliche Element. Mn ist festigkeitssteigernd. Es hat sich jedoch gezeigt, dass ein höherer Mn-Gehalt zu einer Reduktion der Bruchdehnung führt. Daher ist der Mn-Gehalt auf maximal 2,9 Gew.-% begrenzt. Die Elemente Al und Sn, die bei herkömmlichen Legierungen dieser Art typischerweise obligatorische Legierungsbestandteile sind, werden bei dieser Cu-Zn-Legierung nicht eingesetzt, sind jedoch bis zu einem Maximalanteil von 0,3 Gew.-% toleriert. Typischerweise liegt der Maximalanteil der Elemente Al und Sn bei 0,1 Gew.-%. Al wird bei herkömmlichen Sondermessinglegierungen alleine oder auch zusammen mit Ni mit einem deutlich höheren Anteil, als in dieser Sondermessinglegierung zugelassen, eingesetzt, um die gewünschten hohen Festigkeiten zu erreichen. Umso überraschender war es, dass mit der beanspruchten Cu-Zn-Legierung die erforderlichen Festigkeiten erreicht werden, auch ohne dass Al beteiligt ist und obwohl Ni nur mit einem geringen Anteil am Aufbau der Legierung beteiligt ist.

Herauszustellen ist in Bezug auf die erfindungsgemäße Legierung ferner, dass diese nur eine relativ geringe Anzahl an obligatorischen Legierungselementen aufweist, was die Verarbeitbarkeit vereinfacht und den Eintrag von Kontaminationen durch Verschleppung im Guss reduziert. Nicht vorhersehbar war, dass mit einer Cu-Zn-Legierung mit einem solch einfachen Legierungsaufbau diese bzw. das daraus hergestellte Legierungsprodukt dennoch einem sehr komplexen Anforderungsprofil genügt, wie dieses beispielsweise für Gleitteile, wie etwa Gleitschuhe als Teil einer Gelenkverbindung erforderlich ist.

Diese Legierung lässt sich kostengünstig herstellen. Als kostengünstig wird eine Legierung dann angesehen, wenn deren Cu-Gehalt gering gehalten wird und die mit der Legierung zu erreichenden Anforderungen über kostengünstigere Begleitelemente erreicht werden. Dieses kann über das Zn-Äquivalent mit den Faktoren nach Guillet zum Ausdruck gebracht werden. Auf diese Weise kann der Cu-Gehalt der Legierung begrenzt werden. Vorzugsweise ist Cu mit nicht mehr als 64 Gew.-% am Aufbau der Legierung beteiligt.

Das Besondere an dieser Legierung ist auch, dass, ohne besondere Schritte beim Herstellen des Legierungsproduktes vornehmen zu müssen, diese bzw. das daraus hergestellte Legierungsprodukt eine für die genannten Zwecke hinreichende Härte, eine den Anforderungen genügende Dehngrenze und Zugfestigkeit immer noch bei hinreichender Bruchdehnung aufweisen. Um beispielsweise dem Anforderungsprofil an einen Gleitschuh als Teil einer Gelenkverbindung zu genügen, sind nicht Maximalwerte bei der Dehngrenze, der Zugfestigkeit und der Härte gewünscht, da in einem solchen Fall das Legierungsprodukt keine ausreichende Dauerfestigkeit bei dynamischen Belastungsfällen aufweisen würde. Eine Bruchdehnung As von zumindest 11 % genügt den diesbezüglichen Anforderungen. Die Bruchdehnung As liegt typischerweise zwischen 8 und 15 %.

Ferner weist diese Legierung eine hinreichende Kaltverformbarkeit auf, um als Vorprodukt hergestellte stranggepresste Stangen kalt ziehen zu können. Hierdurch lassen sich die mechanischen Kennwerte steigern. Zudem wird durch den Prozess des Kaltziehens die Gradheit der Stange verbessert, was positiv für einen nachgeschalteten formgebenden Zerspanungsprozess ist. Die Kaltumformbarkeit dieser Legierung kann auch genutzt werden, um ein daraus hergestelltes Legierungsprodukt ganz oder auch in Teilbereichen kaltumformen zu können, beispielsweise zum Einschließen eines Kugelkopfes einer Kugelgelenkverbindung in der komplementären Kugelgelenkaufnahme durch entsprechendes Bördeln des oberen Randabschnittes der Kugelgelenkaufnahme.

Diese Legierung weist interessanterweise zudem eine gute Spanbarkeit aus. Zerspanungsbegünstigend sind die durch den P-Gehalt sich im Gefüge bildenden Phosphide ebenso wie der Cr-Gehalt. Die Festigkeitseigenschaften der Legierung bzw. des daraus hergestellten Legierungsproduktes sind auch deswegen nicht so hoch gewählt, damit sich die Gelenkpartner während einer ersten Betriebsphase einspielen beziehungsweise einarbeiten oder einlaufen können. Ferner genügt diese Legierung den Anforderungen an eine ausreichende Relaxationsfestigkeit. Die Verschleißfestigkeit wird durch die infolge der Legierungszusammensetzung sich ausbildenden Hartphasen, insbesondere Silizide, die homogen im Gefüge verteilt sind, bereitgestellt. Ein Hartphasenanteil bzw. der Anteil an intermetallischen Phasen von 2 - 6 Vol.- % im Gefüge gewährleistet die Verschleißbeständigkeit. Im Übrigen ist das Gefüge dieser Legierung bzw. des daraus hergestellten Legierungsproduktes α-Phasen dominant. Das Gefüge umfasst typischerweise nur 10 - 30 Vol.-% β-Phase. Der Rest des Gefüges wird neben den Hartphasen durch α-Phase gebildet, wobei in einem untergeordneten und die Eigenschaften der Legierung nicht beeinflussendem Maße auch weitere Phasen mit einem Anteil von max. 2 Vol.-%, vorzugsweise von nicht mehr als 1 Vol.-% vorhanden sein können. Hierzu zählen vor allem die lichtmikroskopisch nicht sichtbaren feineren Gefügebestandteile, bei denen es sich typischerweise um Ausscheidungen mit einer Größe von weniger als 1 µm handelt.

Die Reserve für plastische Verformung und damit auch für die Sicherheit gegen Bauteilbruch durch Ermüdung kann über das Streckgrenzenverhältnis zum Ausdruck gebracht werden. Das Streckgrenzenverhältnis Rₚ0,2/Rₘ liegt daher zwischen 70 % und 78 %. Wesentlich für die Legierung bzw. das Legierungsprodukt ist auch die Biegewechselfestigkeit, die mehr als 185 MPa bei der erfindungsgemäßen Legierung beträgt. Zugrundgelegt werden 10⁷ Lastwechsel zur Prüfung der Biegewechselfestigkeit. Die elektrische Leitfähigkeit der erfindungsgemäßen Legierung liegt zwischen 9 und 16 mS/m.

Herauszustellen ist bei der beanspruchten Legierung auch die Feinkörnigkeit des Gefüges. Ein hinreichend feines Gefüge hat positiven Einfluss auf die Relaxationsbeständigkeit, die Festigkeit, insbesondere die Dauerfestigkeit, weitere mechanische Kennwerte, die Oberflächenqualität und Zerspanungseigenschaften. Für all diese Faktoren ist ein feinkörniges Gefüge zweckmäßig. Die Härte HBW im Fertigteil liegt in der Spanne von 160 bis 190, wobei die Obergrenze vorzugsweise bei HBW 210 liegt.

Auch wenn sich die vorbeschriebenen positiven Eigenschaften dieser Cu-Zn-Legierung über die gesamte Spanne der am Aufbau der Legierung beteiligten Elemente feststellen lassen, wird das an diese Legierung gestellte komplexe Anforderungsprofil mit folgenden Legierungszusammensetzungen weiter geschärft werden (Angaben in Gew.-%):

| | |
|---|---|
| Cu: | 60,5 - 65,5 % |
| Si: | 1,15 - 1,6 % |
| Mn: | 2,58 - 2,78 % |
| Ni: | 0,2 - 0,5 % |
| Fe: | 0,03 - 0,11 % |
| P: | 0,26 - 0,39 % |
| Cr: | 0,025 - 0,095 % |
| Al: | max. 0,1 % |
| Sn: | max. 0,1 % |
| Pb: | max. 0,1 % |
| Zn: | Rest, |

nebst unvermeidbaren Verunreinigungen, die elementbezogen nicht mehr als 0,1 % und in der Summe nicht mehr als 0,3 % betragen,
insbesondere wenn die Legierung folgende Zusammensetzung aufweist (Angaben in Gew.-%):

| | |
|---|---|
| Cu: | 62 - 64,2 % |
| Si: | 1,15 - 1,6 % |
| Mn: | 2,58 - 2,78 % |
| Ni: | 0,25 - 0,45 % |
| Fe: | 0,035 - 0,095 % |
| P: | 0,26 - 0,39 % |
| Cr: | 0,025 - 0,095 % |
| Al: | max. 0,1 % |
| Sn: | max. 0,1 % |
| Pb: | max. 0,1 % |
| Zn: | Rest, |

nebst unvermeidbaren Verunreinigungen, die elementbezogen nicht mehr als 0,1 % und in der Summe nicht mehr als 0,3 % betragen,
insbesondere wenn die Legierung folgende Zusammensetzung aufweist (Angaben in Gew.-%):

| | |
|---|---|
| Cu: | 62,5 - 64 % |
| Si: | 1,25-1,5% |
| Mn: | 2,58 - 2,78 % |
| Ni: | 0,25 - 0,45 % |
| Fe: | 0,04 - 0,09 % |
| P: | 0,26 - 0,39 % |
| Cr: | 0,025 - 0,095 % |
| Al: | max. 0,1 % |
| Sn: | max. 0,1 % |
| Pb: | max. 0,1 % |
| Zn: | Rest, |

nebst unvermeidbaren Verunreinigungen, die elementbezogen nicht mehr als 0,1 % und in der Summe nicht mehr als 0,3 % betragen,
insbesondere wenn die Legierung folgende Zusammensetzung aufweist:

| | |
|---|---|
| Cu: | 63 - 63,5 % |
| Si: | 1,3 - 1,4 % |
| Mn: | 2,6 - 2,7 % |
| Ni: | 0,3 - 0,4 % |
| Fe: | 0,05 - 0,08 % |
| P: | 0,3 - 0,35 % |
| Cr: | 0,05 - 0,08 % |
| Al: | max. 0,1 % |
| Sn: | max. 0,1 % |
| Pb: | max. 0,1 % |
| Zn: | Rest, |

nebst unvermeidbaren Verunreinigungen, die elementbezogen nicht mehr als 0,1 % und in der Summe nicht mehr als 0,3 % betragen.

In einem bevorzugten Ausführungsbeispiel ist vorgesehen, die unvermeidbaren Verunreinigungen enger zu tolerieren, sodass diese elementbezogen nicht mehr als 0,05 Gew.-% und in der Summe nicht mehr als 0,2 Gew.-% betragen.

Hergestellt wird die Legierung bzw. das Legierungsprodukt durch allgemein übliche Verfahrensschritte. Damit ist es zum Erzielen der gewünschten Legierungseigenschaften nicht erforderlich, besondere Prozessschritte anzuwenden. Die Legierung kann wie folgt hergestellt werden: Die Legierung wird in einem ersten Schritt gegossen, und zwar vorzugsweise mit einer Gießtemperatur zwischen 980°C und 1.100°C, vorzugsweise zwischen 1.000°C und 1.050°C. Der Legierungsguss wird anschließend stranggepresst in einem Temperaturfenster zwischen 720°C und 780°C, vorzugsweise zwischen 730°C und 760°C. Stranggepresst wird typischerweise eine Rundstange. In einem nachfolgenden Schritt wird die stranggepresste Stange kaltgezogen. In diesem kaltgezogenen Zustand weist die Stange als Halbzeug zum Herstellen der Legierungsprodukte, beispielsweise von Gleitschuhen als Teil einer Gelenkverbindung ihre höchsten mechanischen Festigkeitswerte auf, jedoch nur eine relativ geringe Bruchdehnung. Bei diesen ersten Prozessschritten handelt es sich um übliche Schritte zum Herstellen eines Halbzeuges, aus dem die eigentlichen Sondermessinglegierungsprodukte hergestellt werden.

Zum Herstellen eines Legierungsproduktes kann ebenfalls von einem Schmiedestück als Ausgangsprodukt ausgegangen werden. Dieses kann anschließend noch geglüht (wärmebehandelt) werden. Gegebenenfalls ist nach dem Schritt der Wärmebehandlung ein Zwischenschritt zum Richten der geschmiedeten Legierungsprodukte durchzuführen, wenn beispielsweise im Falle von Platten die Ebenheit derselben zu weit von den Vorgaben abweicht. Anschließend wird das Legierungsprodukt nochmals geglüht (wärmebehandelt). Das Legierungsprodukt kann nach dem Schritt des Schmiedens auch zu anderen Zwecken kalt umgeformt, z. B. zwecks Prägens, und anschließend entspannungsgeglüht werden. Bei einem Schmiedeteil stellen sich dieselben Vorteile ein wie bei einem Legierungsprodukt, welches ausgehend von einem stranggepressten Stangenabschnitt hergestellt worden ist.

Nach dem Kaltziehen wird zum Einstellen der speziellen Festigkeitskennwerte die kaltgezogene und durch das Kaltziehen gerichtete Stange thermisch entspannt in einem Temperaturfenster von 380°C - 420°C für 180 - 280 min. mit anschließender Abkühlung an Umgebungsluft. Die vorstehenden Angaben beziehen sich auf eine Durchführung dieses Prozesses in einem Kammerofen. In einem Durchlaufofen können dieselben Ergebnisse auch in kürzerer Zeit, und zwar bereits nach 20 bis 30 Minuten erreicht werden. Hierdurch werden die durch das Kaltziehen erzielten Festigkeiten in Bezug auf die Dehngrenze, die Zugfestigkeit und die Härte etwas reduziert und zugleich jedoch die relativ geringe Bruchdehnung der kaltgezogenen Stange deutlich erhöht. Dass dieses in dem erforderlichen Maße durch eine solche thermische Behandlung gelingt, liegt in der besonderen Legierungszusammensetzung begründet. Diese thermische Behandlung ist auch für die Entstehung der bereits vorstehend angesprochenen feinkörnigen Silizide verantwortlich. Die auf diese Weise erzielten mechanischen Kennwerte der Stange genügen nicht nur dem Anforderungsprofil an einen als Legierungsprodukt herzustellenden Gleitschuh als Teil einer Gelenkverbindung, sondern auch an die Weiterverarbeitbarkeit dieser Stange als Halbzeug zum Herstellen der gewünschten Legierungsprodukte, insbesondere seine Zerspanbarkeit.

Die mechanischen Kennwerte nach der finalen thermischen Behandlung der stranggepressten und nachfolgend kaltgezogenen Stange mit einer Umformung von 20 % bezogen auf die Querschnittsflächenreduzierung und somit des Fertigteils liegen in den nachfolgend angegebenen Wertebereichen:
Dehngrenze Rp0,2: 430 - 560 MPa, insbesondere zwischen 430 bis 500 MPa
Zugfestigkeit Rm: 570 - 670 MPa, insbesondere zwischen 570 bis 630 MPa
Bruchdehnung As: 8 - 11 % und
Härte: HBW 165 - 205, insbesondere zwischen 165 bis 195.

Die mechanischen Kennwerte können in einfacher Weise durch die Kaltumformung beeinflusst werden. Wenn die mechanischen Kennwerte des Legierungsproduktes geringer sein sollen, wird die Kaltverformung mit einer geringeren Umformung durchgeführt, beispielsweise mit nur 10 %.

Nach einem Ablängen eines Abschnittes einer solchen Stange wird dieser zerspanend in die gewünschte Form gebracht, beispielsweise in die Form eines Gleitschuhs als Teil einer Gelenkverbindung. Handelt es sich bei dem Legierungsprodukt um einen Gleitschuh als Teil einer Gelenkverbindung, umfasst dieses die äußere und innere Konturgebung und damit auch das Ausbilden einer Gelenkkopfaufnahme, in die der Gelenkkopf des Gelenkpartners, etwa als Teil eines Kolbens eingesetzt wird. Die durch die thermische Behandlung erhöhte Bruchdehnung bewirkt die Möglichkeit einer plastischen Kaltverformbarkeit des Legierungsproduktes, um einen in die Gelenkkopfaufnahme eingesetzten Gelenkkopf formschlüssig darin einfassen zu können. Die Gelenkkopfaufnahme des Gleitschuhs wird zu diesem Zweck vorzugsweise mit einer Höhe ausgeführt, dass diese den Scheitel des Gelenkkopfes übergreift. Für die formschlüssige Verbindung dieser beiden Gelenkpartner kann dann der Mündungsrandbereich der Gelenkkopfaufnahme kaltverformt, beispielsweise gebördelt werden, sodass dieser den Gelenkkopf nicht nur bezüglich seiner Höhe, sondern auch physisch unter Ausbildung eines Hinterschnittes übergreift, sodass dann der Gelenckopf formschlüssig innerhalb der Gelenkkopfaufnahme gefangen ist. Diese Kaltverformung des Mündungsrandbereiches der Gelenkkopfaufnahme hat zum Vorteil, dass dann für die erforderliche Verbindung der beiden Gelenkpartner keine Zusatzteile benötigt werden. Ferner ist von Vorteil, dass der Mündungsrandbereich der Gelenkkopfaufnahme durch diese plastische Kaltverformung eine Kaltverfestigung erfahren hat, sodass der beziehungsweise die umgeformten Abschnitte des Mündungsrandbereiches der Gelenkkopfaufnahme als Gelenkkopfverschluss ein erhöhtes Widerstandsmoment bereitstellen, sodass der darin aufgenommene Gelenkkopf auch bei dynamischen Belastungen sicher in der Gelenkkopfaufnahme gehalten ist. Aufgrund dieser Kaltverfestigung wird zudem weniger Material für die Bereitstellung des vorbeschriebenen Gelenkkopfverschlusses benötigt. Daher eignet sich eines solche Ausgestaltung vor allem auch für solche Anwendungen mit geringem Platzbedarf.

Die beanspruchte Legierung ist bleifrei. Ein Maximalgehalt von 0,1 Gew.-% Pb ist toleriert.

Zu der erfindungsgemäßen Cu-Zn-Legierung wurden Untersuchungen vorgenommen und mit den Ergebnissen von Vergleichslegierungen verglichen.

Die untersuchen Proben wurden wie folgen hergestellt:
- Gießen der jeweiligen Legierung bei einer Temperatur von 1.010°C. Der Guss wurde als vertikaler Strangguss mit einem Durchmesser von 290 mm durchgeführt;
- Strangpressen des Legierungsgusses bei einer Temperatur von etwa 745°C, welche stranggepresste Stange (Vollmaterial) einen Durchmesser von 36,5 mm aufweisen;
- Kaltziehen der stranggepressten Stangen zum Erzielen einer Umformung von 20 % bezogen auf die Querschnittsfläche der stranggepressten Stange;
- thermische Behandlung der kaltgezogenen Stange bei etwa 395°C für 220 min. und anschließend Abkühlung an Luft;
- Ablängen eines Probestückes;
- Durchführen verschiedener Untersuchungen an dem abgelängten Probenstück zur Ermittlung unterschiedlicher Kennwerte.

In der nachfolgenden Tabelle 1 sind die Legierungszusammensetzungen der untersuchten Proben wiedergegeben, wobei die Proben 1 bis 6 erfindungsgemäße Cu-Zn-Legierungen und die Proben 7 bis 12 Vergleichslegierungen sind:

**Tabelle 1**

| | **Cu** | **Si** | **Mn** | **Ni** | **Fe** | **P** | **Cr** | **Al** | **Sn** | **Pb** | **Zn** |
|---|---|---|---|---|---|---|---|---|---|---|---|
| 1 | 63,4 | 1,38 | 2,68 | 0,4 | 0,07 | 0,34 | 0,07 | 0,02 | 0,01 | 0,01 | Rest |
| 2 | 64,1 | 1,5 | 2,72 | 0,52 | 0,03 | 0,28 | 0,09 | 0,04 | 0,01 | 0,01 | Rest |
| 3 | 65,1 | 1,21 | 2,8 | 0,41 | 0,1 | 0,32 | 0,05 | 0,05 | 0,03 | 0,01 | Rest |
| 4 | 63,2 | 1,32 | 2,67 | 0,38 | 0,06 | 0,31 | 0,06 | 0,03 | 0,02 | 0,01 | Rest |
| 5 | 62,2 | 1,15 | 2,58 | 0,18 | 0,04 | 0,37 | 0,11 | 0,08 | 0,03 | 0,02 | Rest |
| 6 | 60,9 | 1,22 | 2,61 | 0,21 | 0,12 | 0,29 | 0,08 | 0,06 | 0,02 | 0,01 | Rest |
| 7 | 66,5 | 1,32 | 3,05 | 0,32 | 0,14 | 0,24 | 0,12 | 0,04 | 0,02 | 0,01 | Rest |
| 8 | 67,2 | 1,75 | 2,95 | 0,12 | 0,12 | 0,32 | 0,09 | 0,09 | 0,05 | 0,01 | Rest |
| 9 | 59,8 | 0,9 | 2,4 | 0,45 | 0,07 | 0,27 | 0,01 | 0,2 | 0,07 | 0,02 | Rest |
| 10 | 63,1 | 1,2 | 2,8 | 0,5 | 0,095 | 0,39 | 0,11 | 0,17 | 0,1 | 0,03 | Rest |
| 11 | 62,2 | 1,6 | 2,2 | 0,6 | 0,13 | 0,23 | - | 0,12 | 0,04 | 0,01 | Rest |
| 12 | 64,2 | 1,05 | 3,2 | 0,45 | 0,12 | 0,18 | 0,03 | 0,07 | 0,06 | 0,01 | Rest |

Die erfindungsgemäßen Legierungen weisen einen Hartphasenanteil von 4,5 - 5,5% auf.

Insgesamt wurden mechanische Kennwerte, wie etwa die Dehngrenze Rp0,2, die Zugfestigkeit Rm, die Bruchdehnung As, das Streckgrenzenverhältnis (Quotient aus der Dehngrenze Rp0,2 zur Zugfestigkeit Rm) und die Härte HBW der Proben im Presszustand (nach dem Strangpressen), nach dem Kaltziehen und im Endzustand nach der thermischen Behandlung erfasst. Ferner wurden das Gefüge im Endzustand der Proben (Fertigteil) sowie die Spanbarkeit ebenso untersucht wie die Relaxationsfestigkeit und die Biegewechselfestigkeit, die Aufschluss über die Dauerfestigkeit bei dynamischen zyklischen Belastungskomponenten widerspiegelt. Die zu den einzelnen Proben diesbezüglich ermittelten Ergebnisse sind in Tabelle 2 wiedergegeben.

Die Ergebnisse der untersuchten Fertigteil-Proben sind der nachfolgenden Tabelle 2 zu entnehmen. Die Angaben in Bezug auf Spanbarkeit, Relaxationsfestigkeit sowie der Feinkörnigkeit der Matrix sind als Vergleichsuntersuchungen anzusehen, wobei eine mit ⊕ gekennzeichnete Probe dem jeweiligen Zweck genügt, während eine mit Θ gekennzeichnete Probe der diesbezüglichen Anforderung nicht genügt.

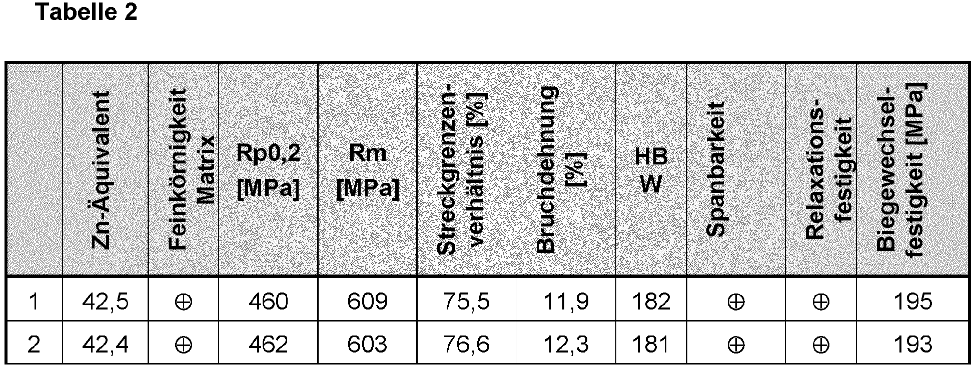

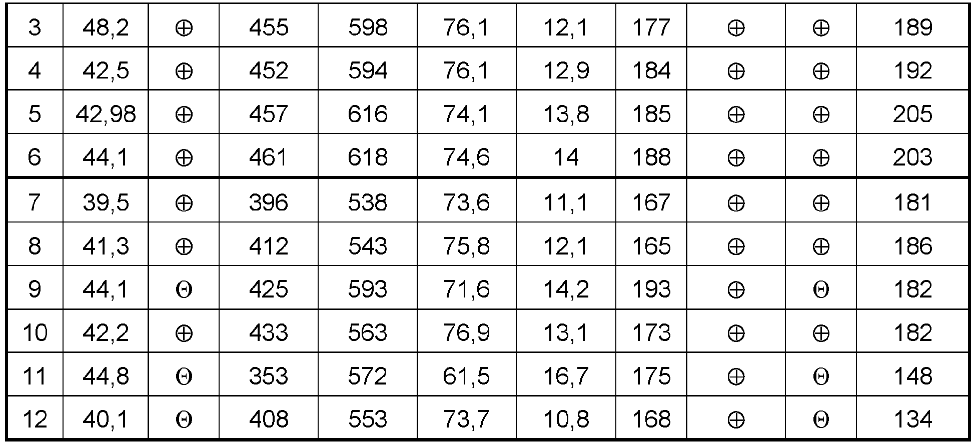

Aus denselben Legierungen wurden auch Probenstücke hergestellt, die einem Kaltziehen nur mit einer Umformung von 10 % unterworfen worden sind. Die zu diesen Proben ermittelten mechanischen Kennwerte sind nachfolgend wiedergegeben:

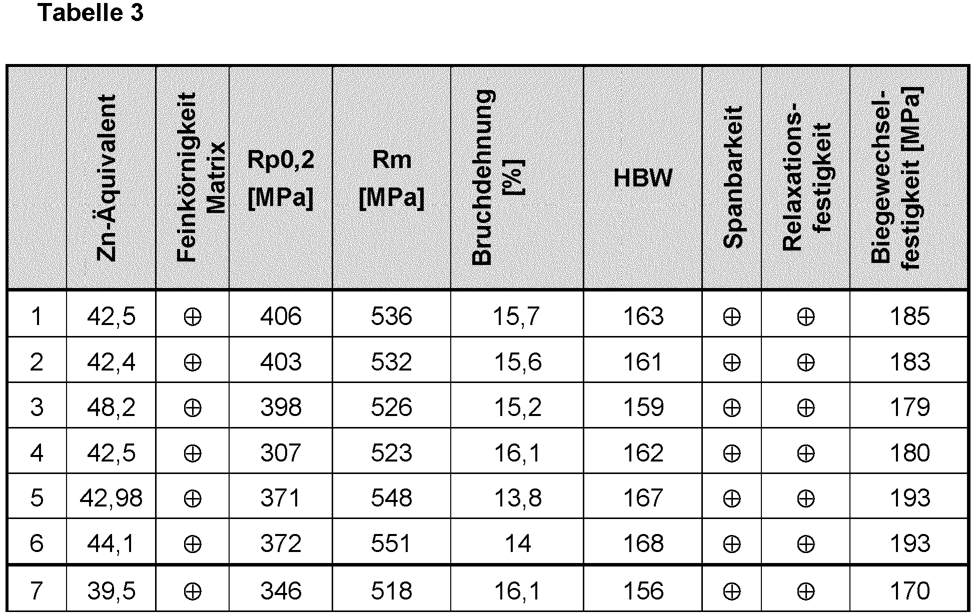

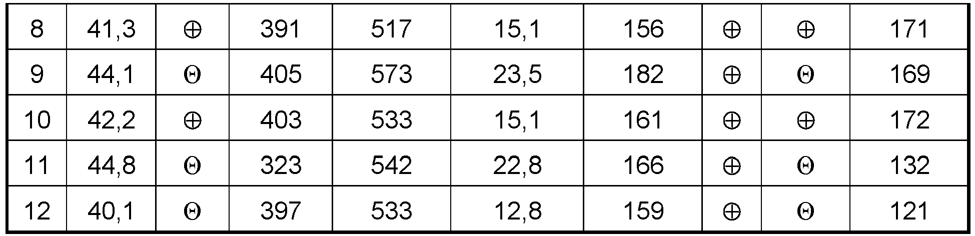

Aus denselben erfindungsgemäßen Legierungen wurden ferner Probenstücke mit einem Stranggussdurchmesser von 18mm und einer Umformung mit 20% analysiert. Die diesbezüglich gegenüber den Festigkeitswerten der vorstehend wiedergegebenen Proben mit dem Durchmesser der stranggepressten Stange von 36,5mm sind erwartungsgemäß höher. Diese sind in der nachfolgenden Tabelle wiedergegeben:

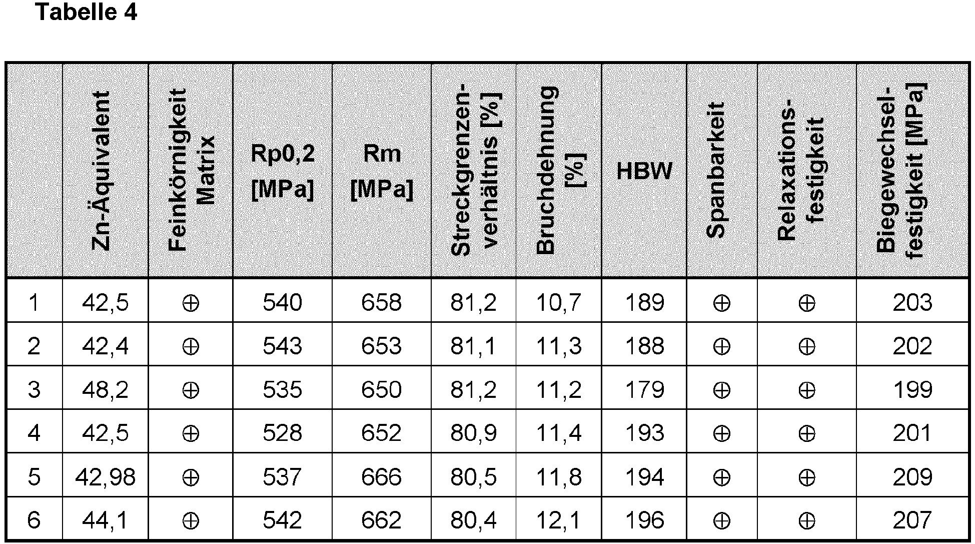

Die Biegewechselfestigkeit ist unter Zugrundelegung von 10⁷ Lastwechseln mit der angegebenen Spannung gemäß ASTM E 466-15 (DIN 50100) geprüft worden.

Ein Vergleich der Untersuchungsergebnisse der erfindungsgemäßen Proben (Proben 1 bis 6) mit den nicht-erfindungsgemäßen Legierungszusammensetzungen (7 bis 12) zeigt, dass letztere in zumindest einer der untersuchten Eigenschaften nicht den Anforderungen genügen. In Bezug auf die Biegewechselfestigkeit wird den Anforderungen genügt, wenn eine Probe mit einer Spannung von 170 MPa oder mehr dem Lastwechsel unterworfen wurde und keine Beschädigungen detektiert werden konnten. Die Proben aus den erfindungsgemäßen Legierungen weisen den Angaben in den vorstehenden Tabellen zufolge eine höhere Biegewechselfestigkeit auf. Die Anforderung an die Bruchdehnung As beträgt 10 % bis 14 %, so dass diejenigen Vergleichsproben, die eine zu geringe oder eine zu hohe Bruchdehnung aufweisen, den diesbezüglichen Anforderungen nicht genügen. Bezüglich des Streckgrenzenverhältnisses genügt eine Probe den Anforderungen, wenn diese zumindest 66 %, jedoch nicht mehr als 83 % beträgt. Da sämtliche Proben mit demselben Verfahren hergestellt worden sind, werden diese Unterschiede den gegenüber den erfindungsgemäßen Legierungszusammensetzungen unterschiedlichen Legierungszusammensetzungen zugeschrieben.

Sämtliche Proben mit Ausnahme der Probe 9 und 12 wiesen eine hinreichende Schmierstoffverträglichkeit auf, sind mithin geeignet, in unterschiedlichen Ölumgebungen gleichermaßen eingesetzt zu werden, ohne eine übermäßige Anfälligkeit und damit einen erhöhten Verschleiß zu zeigen.

Nachfolgend ist ein Ausführungsbeispiel eines als Gleitschuh ausgebildeten Legierungsproduktes der erfindungsgemäßen Legierung unter Bezugnahme auf die beiliegenden Figuren beschrieben. Es zeigen:
- **Fig. 1:**: Eine schematisierte Querschnittsdarstellung durch eine Gelenkverbindung zwischen einem Gleitschuh mit einer Gelenkkopfaufnahme und einem darin eingesetzten Gelenkkopf eines Gelenkpartners vor einer formschlüssigen Verbindung der beiden Gelenkpartner und
- **Fig. 2:**: nach Ausbilden einer formschlüssigen Verbindung der beiden Gelenkpartner.

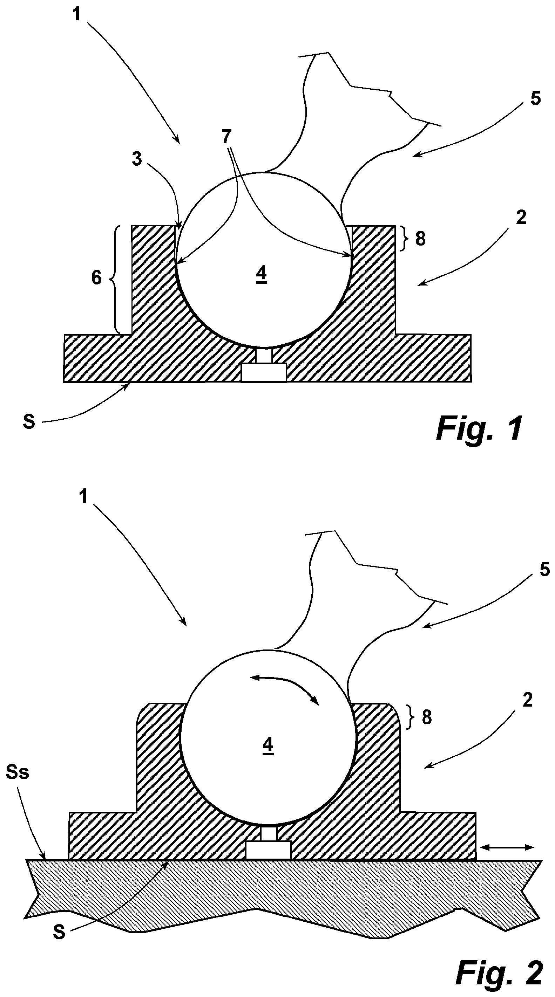

Figur 1 zeigt eine Kugelgelenkverbindung 1. Diese Kugelgelenkverbindung 1 ist Teil einer als Schrägscheiben- oder Schrägachsenpumpe ausgelegten Axialkolbenpumpe. Die Kugelgelenkverbindung 1 umfasst einen Gleitschuh 2. Der Gleitschuh 2 ist mit seiner Sohle S an einer Schwenkscheibe Ss abgestützt. Der Gleitschuh 2 ist gegenüber der Schwenkscheibe Ss in der Ebene ihrer Oberfläche bewegbar. Der Gleitschuh 2 ist aus der Legierung der Probe 4 hergestellt worden. Nach Ablängen eines Stückes von der stranggepressten und thermisch behandelten Stange als Halbzeug beziehungsweise Vorprodukt ist dieses Stangenstück durch zerspanende Bearbeitung in seine in Figur 2 im Querschnitt gezeigte Form gebracht worden. Bei dem in den Figuren dargestellten Ausführungsbeispiel erfolgte dieses durch zerspanende Trocken- oder Nassbearbeitung, beispielsweise durch Drehen. Der Gleitschuh 2 ist rotationssymmetrisch. Im Rahmen dieser zerspanenden Bearbeitung wurde in das Halbzeug auch eine Gelenkkopfaufnahme 3 eingebracht. Der Boden der Gelenkkopfaufnahme 3 ist halbkugelförmig geformt und an die Krümmung der Mantelfläche eines in die Gelenckopfaufnahme 3 eingesetzten Gelenkkopfes 4 des Gelenkpartners 5 angepasst. Bei dem Gelenkkopf 4 handelt es sich um einen Kugelkopf. Bei dem Gelenkpartner 5 handelt es sich um einen Kolben, an den der Gelenkkopf 4 angeformt ist. Die Höhe 6 der Gelenkkopfaufnahme 3 ist so bemessen, dass diese den Scheitel 7 des Gelenkkopfes 4 ausgehend vom Boden der Gelenkkopfaufnahme 3 überragt. In diesem über den Scheitel 7 hinausragenden Abschnitt ist die Gelenkkopfaufnahme 3 zunächst innenseitig zylindrisch, um den Gelenkkopf 4 zum Herstellen der Kugelgelenkverbindung 1 darin einsetzen zu können. In der Darstellung der Figur 1 ist der Gelenckopf 4 noch nicht formschlüssig mit dem Gleitschuh 2 verbunden.

Die formschlüssige Verbindung der beiden Partner der Kugelgelenkverbindung 1 ist in Figur 2 dargestellt. In dieser Figur ist auch die Bewegbarkeit des Gelenkkopfes 4 gegenüber dem Gleitschuh 2 sowie des Gleitschuhs 2 gegenüber der Schwenkscheibe Ss kenntlich gemacht.

Zur formschlüssigen Verbindung zwischen dem Gleitschuh 2 und dem Gelenkkopf 4 wird die durch die thermische Behandlung der stranggepressten Stange bereitgestellte Kaltverformbarkeit genutzt und der Mündungsrandbereich 8 der Gelenkkopfaufnahme 3 in radialer Richtung zu dem Gelenckopf 4 hin umgeformt. Das Ergebnis dieser Kaltumformung ist in Figur 2 gezeigt. Der Mündungsrandbereich 8 der Gelenkkopfaufnahme 3 ist zur Ausbildung eines den Scheitel 7 des Gelenkkopfes 4 übergreifenden Hinterschnittes umgeformt worden. Durch diese Kaltumformung hat der Mündungsrandbereich 8 eine Kaltverfestigung erfahren, sodass dieser härter ist als die übrigen Bestandteile des Gleitschuhs 2. Diese Kaltverfestigung hat zum Vorteil, dass der physische Übergriff über den Scheitel 7 durch den Umformprozess nicht übermäßig groß ausgebildet werden muss, um einen sicheren Verschluss des Gelenkkopfes 4 in der dann durch die Ausbildung eines Hinterschnittes infolge der Umformung geschlossenen Gelenkkopfaufnahme 3 zu gewährleisten.

Die Erfindung ist anhand von Ausführungsbeispielen beschrieben worden. Ohne den Umfang der geltenden Ansprüche zu verlassen, ergeben sich für einen Fachmann zahlreiche weitere Ausgestaltungmöglichkeiten, die Erfindung umzusetzen, ohne dass dieses im Rahmen dieser Ausführungen im Einzelnen näher erläutert werden müsste.

### Bezugszeichenliste

- 1: Kugelgelenkverbindung
- 2: Gleitschuh
- 3: Gelenkkopfaufnahme
- 4: Gelenkkopf
- 5: Gelenkpartner
- 6: Höhe der Gelenkkopfaufnahme
- 7: Scheitel des Gelenkkopfes
- 8: Mündungsrandbereich

- S: Sohle
- Ss: Schwenkscheibe

## Patentansprüche

1. Cu-Zn-Legierung mit (Angaben in Gew.-%):
| | |
|---|---|
| Cu: | 60,5 - 65,5 % |
| Si: | 1,1 - 1,7 % |
| Mn: | 2,51 - 2,9 % |
| Ni: | 0,15 - 0,55 % |
| Fe: | 0,02 - 0,12 % |
| P: | 0,26 - 0,39 % |
| Cr: | 0,018 - 0,12 % |
| Al: | max. 0,3 % |
| Sn: | max. 0,3 % |
| Pb: | max. 0,1 % |
| Zn: | Rest |
nebst unvermeidbaren Verunreinigungen, die elementbezogen nicht mehr als 0,1 % und in der Summe nicht mehr als 0,3 % betragen.

2. Legierung nach Anspruch 1 mit den spezielleren Gehalten folgender Legierungselemente (Angaben in Gew.-%):
| | |
|---|---|
| Si: | 1,15 - 1,6 % |
| Mn: | 2,58 - 2,78 % |
| Ni: | 0,2 - 0,5 % |
| Fe: | 0,03 - 0,11 % |
| Cr: | 0,025 - 0,095 %. |

3. Legierung nach Anspruch 2 mit den spezielleren Gehalten folgender Legierungselemente (Angaben in Gew.-%):
| | |
|---|---|
| Cu: | 62 - 64,2 % |
| Ni: | 0,25 - 0,45 % |
| Fe: | 0,035 - 0,095 %. |

4. Legierung nach Anspruch 3 mit den spezielleren Gehalten folgender Legierungselemente (Angaben in Gew.-%):
| | |
|---|---|
| Cu: | 62,5 - 64 % |
| Si: | 1,25 - 1,5 % |
| Fe: | 0,04 - 0,09 %. |

5. Legierung nach Anspruch 4 mit den spezielleren Gehalten folgender Legierungselemente (Angaben in Gew.-%):
| | |
|---|---|
| Cu: | 63 - 63,5 % |
| Si: | 1,3 - 1,4 % |
| Mn: | 2,6 - 2,7 % |
| Ni: | 0,3 - 0,4 % |
| Fe: | 0,05 - 0,08 % |
| P: | 0,3 - 0,35 % |
| Cr: | 0,05 - 0,08 %. |

6. Legierung nach einem der Ansprüche 1 bis 5, **dadurch gekennzeichnet, dass** das Gefüge im Endzustand der Legierung 15 - 40 %-β-Phase, 1,5 - 5,5 % Hartphasen mit einem Rest an α-Phase nebst unvermeidbaren weiteren Phasen mit einem maximalen Anteil von 2 % aufweist.

7. Legierung nach Anspruch 6, **dadurch gekennzeichnet, dass** der Anteil an β-Phase 15 - 30 %, insbesondere 15 - 25 % der Anteil der Hartphasen 2,5 - 3,5 % beträgt.

8. Legierung nach einem der Ansprüche 1 bis 7, **dadurch gekennzeichnet, dass** das daraus hergestellte Legierungsprodukt im Endzustand folgende mechanische Eigenschaften aufweist:
Dehngrenze Rp0,2: 300 - 560 MPa
Zugfestigkeit Rm: 480 - 650 MPa
Bruchdehnung As: 8 - 25 %
Härte: HBW 140 - 205.

9. Legierung nach Anspruch 8, **dadurch gekennzeichnet, dass** das daraus hergestellte Legierungsprodukt im Endzustand folgende mechanische Eigenschaften aufweist:
Dehngrenze Rp0,2: 300 - 450 MPa
Zugfestigkeit Rm: 480 - 550 MPa
Bruchdehnung As: 8 - 18 %
Härte: HBWm 140 - 170.

10. Legierungsprodukt hergestellt aus der Legierung nach einem der Ansprüche 1 bis 9, **dadurch gekennzeichnet, dass** das Legierungsprodukt ein aus einer stranggepressten Stange durch spanende Bearbeitung hergestellter Gleitschuh (2) ist.

11. Gelenk umfassend eine Gelenkkopfaufnahme (3) und einen Gelenckopf (4) sowie einen Gleitschuh (2) nach Anspruch 10, **dadurch gekennzeichnet, dass** der Gleitschuh (2) Teil eines Gelenkes ist und eine Gelenkkopfaufnahme (3) sowie einen darin eingesetzten und formschlüssig darin gegenüber dem Gleitschuh (2) beweglich gehaltenen Gelenkkopf (4) aufweist, wobei der Formschluss durch eine den Gelenkkopf zumindest bereichsweise übergreifende Kaltverformung des Mündungsrandbereiches (8) der Gelenkkopfaufnahme (3) bereitgestellt ist.

12. Legierungsprodukt nach Anspruch 11, **dadurch gekennzeichnet, dass** der Gleitschuh (2) mit dem in seine Gelenkkopfaufnahme (3) eingesetzten Gelenkkopf (4) als Kugelgelenk ausgebildet ist.

13. Verfahren zum Herstellen eines Legierungsproduktes aus der Legierung nach einem der Ansprüche 1 bis 9 mit folgenden Schritten:
- Bereitstellen eines Legierungsgusses,
- Strangpressen einer Stange bei einer Temperatur zwischen 720°C und 780°C, insbesondere bei etwa 745°C,
- Kaltverformen der stranggepressten Stange durch Ziehen mit einer Umformung von 10 - 24 %, bezogen auf die durch die Kaltverformung erzielte Stangenquerschnittsfläche in Bezug auf die Ausgangsstangenquerschnittsfläche
- thermisches Entspannen der kaltverformten Stange in einem Temperaturfenster von 380°C - 430°C für 160 - 320 min, insbesondere bei etwa 395°C für 220 min, wobei der Schritt des thermischen Entspannens in einem Durchlaufofen durchgeführt werden kann, an welches sich eine Abkühlung an ruhender oder bewegter Umgebungsluft anschließt und
- Formgeben des Legierungsproduktes durch zerspanende Bearbeitung eines von der thermisch entspannten Stange abgelängten Abschnittes.

14. Verfahren nach Anspruch 13 , **dadurch gekennzeichnet, dass** die Legierung bei einer Temperatur zwischen 980°C und 1.100°C, vorzugsweise zwischen 1.000°C und 1.050°C gegossen wird.

15. Verfahren nach Anspruch 13 oder 14, **dadurch gekennzeichnet, dass** das Legierungsprodukt Teil eines Gelenkes ist, wobei durch die spanende Bearbeitung eine Gelenkkopfaufnahme (3) erstellt wird, in die ein Gelenkkopf (4) eingesetzt wird, und anschließend ein Formschluss ausgebildet wird, durch den der Gelenkkopf (4) in der Gelenckopfaufnahme (3) des Legierungsproduktes darin beweglich gehalten ist, indem der Mündungsrandbereich (8) der Gelenkkopfaufnahme (3) in Umfangsrichtung zumindest bereichsweise kaltverformt wird, damit der kaltverformte Mündungsrandbereich (8) den Gelenkkopf (4) formschlüssig übergreift.

16. Verfahren nach Anspruch 15, **dadurch gekennzeichnet, dass** der Mündungsrandbereich zum Ausbilden des Formschlusses des Legierungsproduktes mit dem Gelenkkopf gebördelt wird.

## Claims

1. A Cu-Zn alloy with (in % by weight):
Cu: 60.5 - 65.5%
Si: 1.1 - 1.7%
Mn: 2.51 - 2.9%
Ni: 0.15 - 0.55%
Fe: 0.02 - 0.12%
P: 0.26 - 0.39%
Cr: 0.018 - 0.12%
Al: max. 0.3%
Sn: max. 0.3%
Pb: max. 0.1 %
Zn: remainder
together with unavoidable impurities, which do not exceed 0.1% per element and do not exceed 0.3% in total.

2. The alloy according to claim 1 with the more specific contents of the following alloy elements (in % by weight):
Si: 1.15 - 1.6%
Mn: 2.58 - 2.78%
Ni: 0.2 - 0.5%
Fe: 0.03 - 0.11%
Cr: 0.025 - 0.095%.

3. The alloy according to claim 2 with the more specific contents of the following alloy elements (in % by weight):
Cu: 62 - 64.2%
Ni: 0.25 - 0.45%
Fe: 0.035 - 0.095%.

4. The alloy according to claim 3 with the more specific contents of the following alloy elements (in % by weight):
Cu: 62.5 - 64 %
Si: 1.25 - 1.5 %
Fe: 0.04 - 0.09 %.

5. The alloy according to claim 4 with the more specific contents of the following alloy elements (in % by weight):
Cu: 63 - 63.5%
Si: 1.3 - 1.4%
Mn: 2.6 - 2.7%
Ni: 0.3 - 0.4%
Fe: 0.05 - 0.08%
P: 0.3 - 0.35%
Cr: 0.05 - 0.08%.

6. The alloy according to any one of claims 1 to 5, **characterized in that** the structure in the final state of the alloy has 15 - 40% β phase, 1.5 - 5.5% hard phases with a remainder of α phase together with unavoidable further phases with a maximum share of 2%.

7. The alloy according to claim 6, **characterized in that** the share of β phase is 15 - 30%, in particular 15 - 25%, the share of hard phases is 2.5 - 3.5%.

8. The alloy according to any one of claims 1 to 7, **characterized in that** the alloy product manufactured therefrom has the following mechanical properties in the final state:
Yield strength Rp0.2: 300 - 560 MPa
Tensile strength Rm: 480 - 650 MPa
Elongation at break A5: 8 - 25%
Hardness: HBW 140 - 205.

9. The alloy according to claim 8, **characterized in that** the alloy product manufactured therefrom has the following mechanical properties in the final state:
Yield strength Rp0.2: 300 - 450 MPa
Tensile strength Rm: 480 - 550 MPa
Elongation at break A5: 8 - 18%
Hardness: HBWm 140 - 170.

10. An alloy product manufactured from the alloy according to any one of claims 1 to 9, **characterized in that** the alloy product is a sliding shoe (2) manufactured from an extruded rod by machining.

11. A joint comprising a joint head receptacle (3) and a joint head (4) as well as a sliding shoe (2) according to claim 10, **characterized in that** the sliding shoe (2) is part of a joint and has a joint head receptacle (3) and a joint head (4) inserted therein and held by form-fitting connection therein with respect to the sliding shoe (2), wherein the form-fitting connection is provided by a cold deformation of the mouth edge region (8) of the joint head receptacle (3) which extends at least in regions over the joint head.

12. The alloy product according to claim 11, **characterized in that** the sliding shoe (2) is designed as a ball joint with the joint head (4) inserted into its joint head receptacle (3).

13. A method for manufacturing an alloy product from the alloy according to any one of claims 1 to 9 with the following steps:
- providing an alloy casting,
- extruding a rod at a temperature between 720 °C and 780 °C, in particular at about 745 °C,
- cold forming the extruded rod by drawing with a deformation of 10
- 24%, based on the rod cross-sectional area obtained by cold forming with respect to the initial rod cross-sectional area
- thermally relaxing the cold-formed rod in a temperature window of 380 °C - 430 °C for 160 - 320 min, in particular at about 395 °C for 220 min, wherein the step of thermally relaxing can be carried out in a continuous furnace, which is followed by cooling in still or moving ambient air, and
- shaping the alloy product by machining a section cut to length from the thermally relaxed rod.

14. The method according to claim 13, **characterized in that** the alloy is cast at a temperature between 980 °C and 1,100 °C, preferably between 1,000 °C and 1,050 °C.

15. The method according to claim 13 or 14, **characterized in that** the alloy product is part of a joint, wherein a joint head receptacle (3) is created by machining, into which a joint head (4) is inserted, and that a form-fitting connection is then formed, through which the joint head (4) is movably held in the joint head receptacle (3) of the alloy product by cold-forming the mouth edge region (8) of the joint head receptacle (3) in the circumferential direction at least in regions, so that the cold-formed mouth edge region (8) extends over the joint head (4) in a form-fitting manner.

16. The method according to claim 15, **characterized in that** the mouth edge region is flanged to form the form-fitting connection of the alloy product with the joint head.

## Revendications

1. Alliage Cu-Zn comportant (valeurs exprimées en % en poids) :
Cu : 60,5 - 65,5 %
Si : 1,1 - 1,7 %
Mn : 2,51 - 2,9 %
Ni : 0,15 - 0,55 %
Fe : 0,02 - 0,12 %
P : 0,26 - 0,39 %
Cr : 0,018 - 0,12 %
Al : max. 0,3 %
Sn : max. 0,3 %
Pb : max. 0,1 %
Zn : Reste
plus les impuretés inévitables qui ne dépassent pas 0,1 % par élément et ne dépassent pas 0,3 % au total.

2. Alliage selon la revendication 1 avec les teneurs plus spécifiques des éléments d'alliage suivants (exprimées en % en poids) :
Si : 1,15 - 1,6 %
Mn : 2,58 - 2,78 %
Ni : 0,2 - 0,5 %
Fe : 0,03 - 0,11 %
Cr : 0,025 - 0,095 %.

3. Alliage selon la revendication 2 avec les teneurs plus spécifiques des éléments d'alliage suivants (exprimées en % en poids) :
Cu : 62 - 64,2 %
Ni : 0,25 - 0,45 %
Fe : 0,035 - 0,095 %.

4. Alliage selon la revendication 3 avec les teneurs plus spécifiques des éléments d'alliage suivants (exprimées en % en poids) :
Cu : 62,5 - 64 %
Si : 1,25 - 1,5 %
Fe : 0,04 - 0,09 %.

5. Alliage selon la revendication 4 avec les teneurs plus spécifiques des éléments d'alliage suivants (exprimées en % en poids) :
Cu : 63 - 63,5 %
Si : 1,3 - 1,4 %
Mn : 2,6 - 2,7 %
Ni : 0,3 - 0,4 %
Fe : 0,05 - 0,08 %
P : 0,3 - 0,35 %
Cr : 0,05 - 0,08 %.

6. Alliage selon l'une quelconque des revendications 1 à 5, **caractérisé en ce que** la structure à l'état final de l'alliage présente 15 à 40 % de phase β, 1,5 à 5,5 % de phases dures avec un reste de phase α ainsi que d'autres phases inévitables avec une proportion maximale de 2 %.

7. Alliage selon la revendication 6, **caractérisé en ce que** la proportion de phase β est de 15 à 30 %, en particulier de 15 à 25 %, la proportion de phases dures est de 2,5 à 3,5 %.

8. Alliage selon l'une quelconque des revendications 1 à 7, **caractérisé en ce que** le produit d'alliage ainsi obtenu présente à l'état final les propriétés mécaniques suivantes :
Limite d'élasticité Rp0,2 : 300 - 560 MPa
Résistance à la traction Rm : 480 - 650 MPa
Allongement à la rupture As : 8 - 25 %
Dureté : HBW 140 - 205.

9. Alliage selon la revendication 8, **caractérisé en ce que** le produit d'alliage ainsi obtenu présente à l'état final les propriétés mécaniques suivantes :
Limite d'élasticité Rp0,2 : 300 - 450 MPa
Résistance à la traction Rm : 480 - 550 MPa
Allongement à la rupture As : 8 - 18 %
Dureté : HBWm 140 - 170.

10. Produit en alliage réalisé à partir de l'alliage selon l'une quelconque des revendications 1 à 9, **caractérisé en ce que** le produit en alliage est un patin coulissant (2) réalisé à partir d'une barre extrudée par usinage par enlèvement de copeaux.

11. Articulation comprenant un logement de tête d'articulation (3) et une tête d'articulation (4) ainsi qu'un patin coulissant (2) selon la revendication 10, **caractérisée en ce que** le patin coulissant (2) fait partie d'une articulation et comporte un logement de tête d'articulation (3) ainsi qu'une tête d'articulation (4) insérée dans celui-ci et maintenue par complémentarité de forme de manière à pouvoir se déplacer par rapport au patin coulissant (2), la liaison par complémentarité de forme étant réalisée par une déformation à froid de la zone de bord d'embouchure (8) du logement de tête d'articulation (3) qui recouvre au moins partiellement la tête d'articulation.

12. Produit en alliage selon la revendication 11, **caractérisé en ce que** le patin coulissant (2) avec la tête d'articulation (4) insérée dans son logement de tête d'articulation (3) est conçu comme une rotule.

13. Procédé de fabrication d'un produit en alliage à partir de l'alliage selon l'une quelconque des revendications 1 à 9, comprenant les étapes suivantes :
- fourniture d'une pièce moulée en alliage,
- extrusion d'une barre à une température comprise entre 720 °C et 780 °C, notamment à environ 745 °C,
- formage à froid de la barre extrudée par étirage avec une déformation de 10 à 24 %, basée sur la section transversale de la barre obtenue par formage à froid par rapport à la section transversale initiale de la barre
- détente thermique de la barre formée à froid dans une fenêtre de température de 380 °C à 430 °C pendant 160 à 320 min, en particulier à environ 395 °C pendant 220 min, dans lequel l'étape de détente thermique peut être réalisée dans un four continu, suivie d'un refroidissement à l'air ambiant immobile ou en mouvement et
- mise en forme du produit en alliage par usinage par enlèvement de copeaux d'une section découpée dans la tige thermiquement détendue.

14. Procédé selon la revendication 13, **caractérisé en ce que** l'alliage est coulé à une température comprise entre 980 °C et 1 100 °C, de préférence entre 1 000 °C et 1 050 °C.

15. Procédé selon la revendication 13 ou 14, **caractérisé en ce que** le produit en alliage fait partie d'une articulation, dans lequel l'usinage par enlèvement de copeaux produit un logement de tête d'articulation (3) dans lequel une tête d'articulation (4) est insérée, puis une liaison par complémentarité de forme est formée, au moyen de laquelle la tête d'articulation (4) est maintenue mobile dans le logement de tête d'articulation (3) du produit en alliage, **en ce que** la zone de bord d'ouverture (8) du logement de tête d'articulation (3) est déformée à froid au moins par endroits dans la direction circonférentielle, de sorte que la zone de bord d'ouverture déformée à froid (8) recouvre la tête d'articulation (4) par complémentarité de forme.

16. Procédé selon la revendication 15, **caractérisé en ce que** la zone de bord d'ouverture est bridée pour former la liaison par complémentarité de forme du produit en alliage avec la tête d'articulation.
